# EUROPÄISCHE PATENTANMELDUNG

(11) **EP 0 916 574 A2**
(43) Veröffentlichungstag der Anmeldung: **19.05.1999**
(21) Anmeldenummer: 98120880.4
(22) Anmeldetag: 04.11.1998
(51) Int. Cl.: B63H 1/14, B63H 1/26

(54) **Propeller**

(30) Priorität: 12.11.1997 DE 19750153
(71) Anmelder: Zwirchmayr, Adalbert, 6330 Kufstein (AT)
(72) Erfinder: Zwirchmayr, Adalbert, 6330 Kufstein (AT)
(74) Vertreter: Huss, Carl-Hans, Dipl.-Ing.

(57) **Zusammenfassung**

Die Erfindung richtet auf einen Propeller für die Förderung eines flüssigen oder gasförmigen Medium (z.B. Ölförderung) oder für den Vorschub eines Körpers (z.B. Schiff, Flugzeug) in einem flüssigen oder gasförmigen Medium mit einem gegenüber Propellern nach dem Stande der Technik verbesserten Wirkungsgrad bei gleichzeitiger Geräusch- und Vibrationsminderung. Hierzu wird ein Propeller vorgeschlagen, bei dem Form und Stellung der Flügel 8 das den Propeller umgebende Medium bei Drehung zentral verdichtend in Richtung auf die Propellerachse 9 bewegt. Bei einer bevorzugten Ausführungsform können die obersten, am weitesten von der Propellerachse 9 entfernten Punkte 10 der Flügel in Vorschubrichtung Vr vor einer Ebene 11 senkrecht zur Nabenachse 9 durch die Fußmitte der Flügel liegen. Außerdem können hierzu die Vorderkanten 12 der Flügel nach innen konkav gekrümmt sein und ferner die Flügel ein flaches, tragflächenähnliches Querschnittsprofil mit der gewölbten Seite in Vorschubrichtung aufweisen.

## Beschreibung

Die Erfindung richtet sich auf einen Propeller für die Förderung eines flüssigen oder gasförmigen Mediums (z.B. Ölförderung) oder für den Vorschub eines Körpers (z.B. Schiff, Flugzeug) in einem flüssigen oder gasförmigen Medium, bestehend aus einer auf einer Welle zu befestigenden Nabe und mehreren, von der Nabe radial abstehenden, zur Nabenachse schräggestellten und gewölbten Flügeln.

Derartige Propeller sind z.B. als Schiffsschrauben oder Flugzeugpropeller bekannt, wenn sie dem Vorschub eines Schiffes oder Boots im Wasser oder eines Flugzeugs in der Luft dienen. Sie werden aber auch feststehend zur Bewegung eines flüssigen oder gasförmigen Mediums eingesetzt, z.B. für die Förderung von Flüssigkeiten und Gasen in Pipelines über Land oder in chemischen Fabriken oder in der Nahrungsmittelindustrie, um nur einige der möglichen Anwendungsgebiete zu umreißen.

Grundsätzlich bestehen Propeller aus einer auf einer meist angetriebenen Welle aufgesetzten Nabe und mindestens zwei, von der Nabe abstehenden Flügeln, deren Füße auf der Nabe auf geeignete Weise befestigt sind, z.B. fest oder beweglich (verstellbar) eingesetzt sind. Bei feststehendem Propeller können diese aber auch auf einer nicht angetriebenen Welle montiert sein, um durch ein flüssiges oder gasförmiges Medium angeströmt zu werden, z.B. bei einer Turbine für die Gewinnung elektrischer Energie.

Aufgabe der Erfindung war es, die Vorschubleistung oder die Förderleistung gegenüber herkömmlichen Propellern zu steigern und gleichzeitig die Geräuschentwicklung und Vibration der Welle zu reduzieren.

Die Erfindung ist insbesondere am Beispiel einer Schiffsschraube anhand der Zeichnungen erläutert. Es stellen dar:
- Fig. 1: eine den Stand der Technik darstellende Schiffsschraube (z.B. sog. Ressel-Schraube) im verkleinerten Maßstab und in der Seitenansicht;
- Fig. 2: eine erfindungsgemäße Schiffsschraube im Maßstab und in der Ansicht der Fig. 2;
- Fig. 3: die erfindungsgemäße Schraube in der Vorderansicht in einem gegenüber den Fig. 1 und 2 größeren Maßstab;
- Fig. 4: die Seitenansicht der Schraube nach Fig. 3;
- Fig. 5: die Hinteransicht der Schraube nach den Fig. 3 und 4;
- Fig. 6: zwei im Abstand in einem Schraubenflügel liegende Schnitte parallel zur Propellerachse in einem gegenüber den Fig. 3 bis 4 etwas größeren Maßstab;
- Fig. 7: einen erfindungsgemäß abgewandelten Flugzeugpropeller.

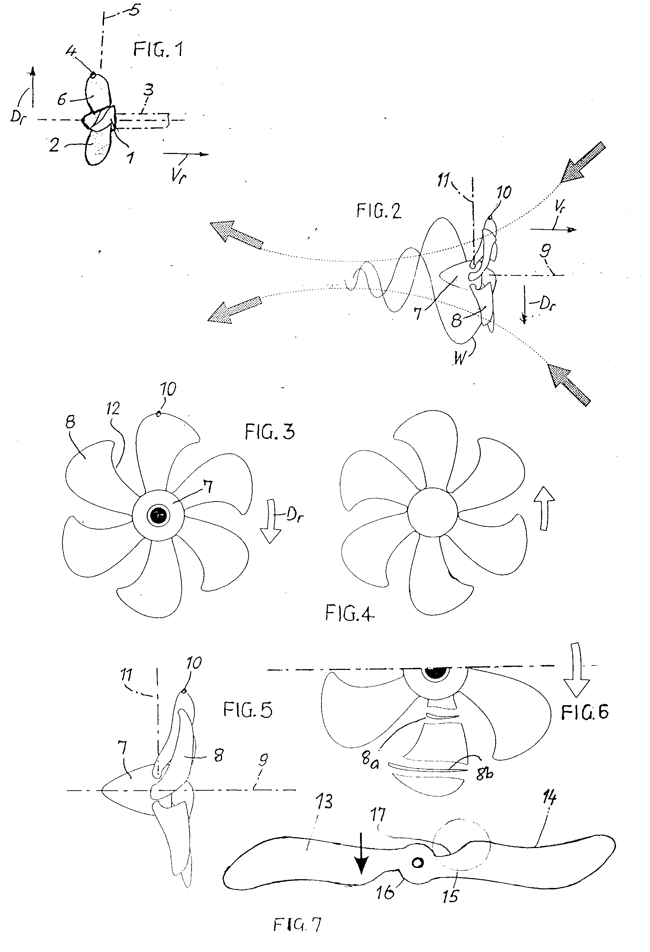

Bei der bekannten Schiffsschraube nach Fig. 1 ist 1 eine Nabe auf der mehrere Flügel 2 montiert sind. Die Nabe 1 ist auf einer strich-punktiert angedeuteten, bei einer Schiffsschraube angetriebenen Welle 3 montiert. Die Drehrichtung für das vorwärts zu bewegende Boot oder Schiff ist mit Dr und die Vorschubrichtung mit Vr angegeben. Der Vorschub entsteht dadurch, daß durch den drehenden Propeller ein dauernder Strom von Wassermasse entgegen der Vorschubrichtung erzeugt wird.

Bei vorbekannten Schrauben nach Fig. 1 liegt der höchste Punkt 4 eines Flügels in Vorschubrichtung Vr hinter einer durch die Fußmitte der Flügel gehenden, senkrecht auf der Propellerachse stehenden Ebene 5 und die Vorderkante 6 der Flügel ist nach außen konvex gekrümmt. Außerdem sind die Flügel entgegen der Vorschubrichtung gewölbt.

Bei einem am Beispiel einer Schiffsschraube in den Fig. 2 bis 6 dargestellten erfindungsgemäßen Propeller mit Nabe 7 und Flügeln 8 liegt der am weitesten von der Drehachse 9 entfernte Punkt 10 eines Flügels dagegen in Vorschubrichtung Vr vor der durch die Fußmitte der Flügel gehenden Ebene 11.

Außerdem sind die Vorderkanten, d.h. die in Drehrichtung Dr vorne liegenden Flügelkanten 12, konkav gekrümmt und die Flügelwölbung derart, daß die gewölbte Seite in Vorschubrichtung Vr zeigt, wie Fig. 6 anhand der Flügelschnitte 8a und 8b veranschaulicht. Aus Fig. 7 geht ebenfalls hervor, daß das Flügelprofil zweckmäßig einem flach gewölbten Tragflügelprofil entspricht.

Durch die neue erfindungsgemäße Propellergestaltung wird ein grundsätzlich anderes Strömungsbild des den Propeller umgebenden Mediums, bei einer Schiffsschraube Wasser, erzeugt als bei Propellern nach dem Stande der Technik. Während nämlich bei herkömmlichen Propellern, z.B. Schiffsschrauben, die Bewegung des die Schraube umgebenden Mediums Wasser nach dem Prinzip der zentrifugalen Verdrängung erfolgt, wird bei einem erfindungsgemäßen Propeller eine zentripedale Bewegung des Mediums herbeigeführt. Der Vorteil dieser Art der erzeugten Strömung liegt darin, daß das Umgebungsmedium nicht von der Schraube schräg nach außen weggedrückt, sondern wie die Pfeile i Fig. 2 veranschaulichen, im Gegenteil in Richtung auf die Schraubenachse gewissermaßen angesaugt wird, wodurch eine Verdichtung des Mediums im Schraubenbereich erzeugt wird und die sich drehenden Flügel mehr Wassermasse vorfinden, in der sie sozusagen besser "greifen" können, als wenn bei einer Schraube nach dem Stande der Technik die Flügel in einem durch die Zentrifugalströmung entdichtetem Medium greifen müssen. Dadurch wird der Wirkungsgrad der Vorschubleistung gegenüber Schrauben nach dem Stande der Technik erhöht.

Außerdem entsteht bei Einsatz vorbekannte Schrauben durch die Entdichtung in der Schraubenumgebung eine starke Kavitation, die bei dem Medium Wasser zur Luftblasenbildung führt, die den Wirkungsgrad zusätzlich mindert. Durch die durch Drehung der erfindungsgemäßen Schraube erzeugten Verdichtung des Umgebungsmedium wird die Kavitation verhindert.

Durch die vorgreifenden konkaven Flügelvorderkante 12 wird hinter der Schraube eine Wirbelbildung erzeugt. Der so entstandene Wirbel rollt sich zunächst aus und anschließend wieder ein, wobei die gegensinnige Ausrollbewegung auf den Propeller zurückwirkt und zusätzlichen Vorwärtsschub durch die natürliche Entdichtung leistet.

Als weiteren Vorteil haben sich für eine erfindungsgemäße Schraube eine gegenüber Schrauben nach dem Stande der Technik erheblich verminderte Geräusch- und Vibrationsentwicklung ergeben.

Fig. 7 schließlich veranschaulicht am Beispiel eines an sich nach dem Stande der Technik geformten Flugzeugpropellers 13, daß auch ein Teilbereich der in Drehrichtung vorn liegenden Flügelkante 14, z.B. in dem Teilbereich im Ausschnitt 15 nahe der Nabe 16, als nach innen gekrümmte konkave hyperbolische Kurve 17 gestaltet sein kann, und Versuche ergaben, daß dadurch der Wirkungsgrad verbessert werden kann.

## Patentansprüche

1. Propeller für die Förderung eines flüssigen oder gasförmigen Medium (z.B. Ölförderung) oder für den Vorschub eines Körpers (z.B. Schiff, Flugzeug) in einem flüssigen oder gasförmigen Medium, bestehend aus einer auf einer Welle zu befestigenden Nabe (7) und mehreren von der Nabe radial abstehenden, zur Propellerachse (9) schräggestellten und gewölbten Flügeln (8),
**gekennzeichnet durch**
eine Form der Flügel und eine Stellung der Flügel auf der Nabe, die bei Drehung das Umgebungsmedium zentripedal verdichtend in Richtung auf die Propellerachse (9) bewegt.

2. Propeller nach dem Anspruch 1,
dadurch gekennzeichnet, daß der höchste, am weitesten von der Nabenachse (9) entfernte Punkt (10) eines jeden Flügels (8) in Vorschubrichtung Vr vor einer Ebene (11) senkrecht zur Nabenachse (9) durch die Fußmitte der Flügel liegt.

3. Propeller nach dem Anspruch 1,
dadurch gekennzeichnet, daß die Vorderkanten (12) der Flügel (8) nach innen konkav gekrümmt sind.

4. Propeller nach den Ansprüchen 1 und 3,
dadurch gekennzeichnet, daß die konkav gekrümmten Vorderkanten (12) der Flügel (8) eine hyperbolische Kurve erzeugen.

5. Propeller nach dem Anspruch 1,
dadurch gekennzeichnet, daß die Flügel ein flaches, tragflügelähnliches Querschnittsprofil mit der gewölbten Seite in Vorschubrichtung aufweisen.

6. Propeller nach einem oder mehreren der Ansprüche 1 bis 5,
dadurch gekennzeichnet, daß ein Teilbereich (15) der Vorderkanten (14) jeden Flügels (13) als konkave, hyperbolische Kurve (17) gestaltet ist. (Fig. 7).

7. Propeller nach dem Anspruch 6,
dadurch gekennzeichnet, daß der Teilbereich (15) an die Nabe (16) anschließt.
